(19) Europäisches Patentamt
European Patent Office
Office européen des brevets

(11) **EP 2 757 238 B1**

(12) **EUROPEAN PATENT SPECIFICATION**

(45) Date of publication and mention
of the grant of the patent:
**30.03.2022 Bulletin 2022/13**

(21) Application number: **11837277.0**

(22) Date of filing: **14.10.2011**

(51) International Patent Classification (IPC):
*F02D 41/40* (2006.01)    *F02D 35/02* (2006.01)
*F02D 21/08* (2006.01)    *F02D 41/30* (2006.01)
*F02D 41/24* (2006.01)    *F02D 41/00* (2006.01)

(52) Cooperative Patent Classification (CPC):
**F02D 35/026; F02D 35/02; F02D 35/028;**
**F02D 41/403;** F02D 35/023; F02D 41/0072;
F02D 41/0085; F02D 41/247; F02D 2041/3052;
F02D 2200/021; F02D 2200/0602;
F02D 2200/0608; F02D 2200/0614;
F02D 2200/101; Y02T 10/40

(86) International application number:
**PCT/JP2011/073642**

(87) International publication number:
**WO 2013/054434 (18.04.2013 Gazette 2013/16)**

(54) **CONTROL DEVICE FOR AN INTERNAL COMBUSTION ENGINE**

STEUERVORRICHTUNG FÜR EINEN VERBRENNUNGSMOTOR

DISPOSITIF DE COMMANDE POUR UN MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.07.2014 Bulletin 2014/30**

(73) Proprietor: **TOYOTA JIDOSHA KABUSHIKI KAISHA**
**Toyota-shi, Aichi-ken, 471-8571 (JP)**

(72) Inventors:
• **TSUZUKI Naoyuki**
**Toyota-shi,**
**Aichi 471-8571 (JP)**
• **NAGANO Shota**
**Toyota-shi,**
**Aichi 471-8571 (JP)**

(74) Representative: **TBK**
**Bavariaring 4-6**
**80336 München (DE)**

(56) References cited:
| | |
|---|---|
| **EP-A1- 2 009 268** | **EP-A1- 2 284 381** |
| **WO-A1-2009/072235** | **JP-A- H1 193 735** |
| **JP-A- 2008 101 591** | **JP-A- 2008 309 010** |
| **JP-A- 2009 007 966** | |

**Description**

The present invention relates to a control apparatus for a compression self-igniting internal combustion engine represented by a diesel engine according to the preamble of claim 1, the features of which are known e.g. from document WO 2009/072235 A1. Specifically, the present invention relates to a procedure for suitably adjusting the amount of preheating inside a cylinder by auxiliary injection (pilot injection).

[Background Art]

As conventionally known, in diesel engines used as engines for automobiles or the like, pilot injection is performed to reduce combustion noises and nitrogen oxides (NOx) contained in exhaust gas by suppressing a sudden increase of combustion pressure and combustion temperature at an initial stage of a combustion process inside a combustion chamber (see, for example, documents 1 and 2.

That is, main injection is performed while the cylinder is in a preheated state attained by self-igniting of fuel injected in pilot injection (preheating by premixed combustion), and thereby an increase of combustion pressure and combustion temperature at the initial stage of a combustion process of fuel injected in main injection is slowed. Accordingly, combustion of fuel injected in main injection is stabilized, thus reducing combustion noises and the amount of NOx generated.

Regarding adjustment of a fuel injection amount in the pilot injection (hereinafter referred to as a "pilot injection amount"), document 2 discloses setting the pilot injection amount before completing engine warm-up so as to be larger than that after completing engine warm-up in order to avoid misfire that may occur before completion of warm-up and to prevent an increase in the amount of HC emitted.

However, in the case where the pilot injection amount is adjusted based on the in-cylinder temperature of the engine, the combustion state of fuel injected in pilot injection changes in accordance with the gas (air) state and the fuel spray state, and therefore the in-cylinder temperature reference time that serves as a reference for determining the pilot injection amount also changes greatly, thus making it difficult to set a suitable pilot injection amount. Accordingly, in the case where an actual pilot injection amount is larger than a suitable pilot injection amount, it is possible that not only a fuel consumption rate deteriorates but also combustion noises of the pilot injection itself are increased. Moreover, due to excessive preheating inside the cylinder, it is possible that the amount of smoke generated by combustion of fuel injected in main injection is increased. On the other hand, in the case where an actual pilot injection amount is smaller than a suitable pilot injection amount, it is possible that the ignition delay is increased, thus resulting in an increased proportion of premixed combustion and increased combustion noises of fuel injected in main injection. Moreover, it is possible that due to the fact that the ignition time of fuel injected in main injection is delayed, misfire occurs in some cases.

In this regard, WO 2009/072235 A1 proposes to execute a pre-injection prior to a main injection of fuel, in order to uniformly increase the temperature of the initial spray in main injection, thereby attempting to achieve desired ignition delay characteristics of fuel from the main injection. To this extent, a division ratio of a total fuel amount between the pre-injection and the main injection is calculated in view of a heat energy in the cylinder necessary for initial combustion in main injection. It should be noted that, when fuel injected in main injection is burnt, the chemical ignition delay is dependent greatly on the spray temperature at the end of the physical ignition delay, and if the pilot injection amount is not suitably set, it is possible that the spray temperature at the end of the physical ignition delay changes and accordingly the chemical ignition delay greatly changes, resulting in a deteriorated combustion state of fuel injected in main injection. The physical ignition delay refers to a time necessary for fuel droplets to evaporate and mix, and depends on the gas temperature in a combustion field. On the other hand, the chemical ignition delay refers to a time necessary for fuel vapor to chemically bond, decompose and oxidatively produce heat.

The present invention has been achieved in view of the above, and an object thereof is to provide a control apparatus for an internal combustion engine that can suitably adjust the amount of preheating inside a cylinder by pilot injection (auxiliary injection). The object of the invention is achieved by a control apparatus according to claim 1. Advantageous embodiments are carried out according to the dependent claims

- Principles of Solution of Present Invention -

A principle of the solution provided by the present invention for achieving the above object is setting as a main injection spray temperature a target spray temperature to be achieved at a specific time after performing main injection, and setting an injection amount of auxiliary injection so as to be able to obtain an in-cylinder preheating amount with which the actual spray temperature at this specific time matches or is brought close to the target spray temperature.

- Solving Means -

Specifically, the present invention takes the form of a control apparatus for a compression self-igniting internal combustion engine in which at least main injection and auxiliary injection that is performed prior to the main injection can be performed as fuel injection from a fuel injection valve into a cylinder. The control apparatus is configured to set, as a target spray temperature, an ignitable temperature of fuel that is injected in the main injection in association with a reference time after performing the main injection, and furthermore to set an auxiliary injection amount in accordance with a shortfall of a reference spray temperature relative to the target spray temperature. The reference spray temperature being an average temperature inside the spray at the reference time. The auxiliary-injection amount setting means is configured to set the auxiliary injection amount by the following steps (a) to (f):

(a) calculating the target spray temperature from an amount of an operating state of the internal combustion engine as a parameter, by using maps that have been prepared through experimentation and simulation or by using arithmetic expressions;

(b) calculating the reference time being the end time of a physical ignition delay period that is a time necessary for fuel droplets injected in the main injection to evaporate and mix;

(c) calculating a reference in cylinder temperature at the reference time;

(d) calculating the reference spray temperature by subtracting, from the reference in-cylinder temperature, a temperature decrease due to a determined fuel injection amount in the main injection by using an arithmetic expression;

(e) calculating a required preheating amount, which is an in-cylinder preheating amount required from the auxiliary injection, as a value upward-corrected to the extent of an amount of energy corresponding to a shortfall of the reference spray temperature relative to the target spray temperature; and

(f) calculating the auxiliary fuel injection amount based on the required preheating amount, and the calculated auxiliary fuel injection amount that is set by the auxiliary injection amount setting means is reflected in the auxiliary injection in the internal combustion engine.

According to this specific matter, it is possible to suitably adjust, by the fuel injection amount of the auxiliary injection set by the auxiliary injection setting means, the preheating amount inside a cylinder attained by performing the auxiliary injection, and thus the actual spray temperature at the specific time after performing the main injection can be matched with or brought close to the target spray temperature. Accordingly, while a reference time that serves as a reference for determining the fuel injection amount in the auxiliary injection is set, the fuel injection amount in the auxiliary injection is set so as to adjust the actual spray temperature using the target spray temperature as a target value, and a suitable adjustment of the in-cylinder preheating amount can be attained, thus making it possible to improve a fuel consumption rate and reduce combustion noises of fuel injected in the main injection.

The end of the physical ignition delay period can be obtained as a time after an in-spray equivalence ratio of fuel injected in the main injection exceeds a specific in-spray combustible equivalence ratio and at which the in-spray equivalence ratio decreases to the in-spray combustible equivalence ratio.

As stated above, the target spray temperature is specified based on the end of the physical ignition delay period of fuel injected in the main injection, and the fuel injection amount in the auxiliary injection is set such that the actual spray temperature at that time is brought close to the target spray temperature, and a reason therefor will now be described as follows. The physical ignition delay period of fuel is a time necessary for fuel droplets to evaporate and mix, and it is possible that the physical ignition delay period is greatly affected by the temperature inside the cylinder and the spray state (in-spray equivalence ratio or the like) and greatly changes in accordance with such parameters. In contrast, the chemical ignition delay period is a time necessary for fuel vapor evaporated and mixed in the physical ignition delay period to undergo chemical bonding, decomposition, and oxidative heat production, and the chemical ignition delay period is greatly affected by the spray temperature at the end of the physical ignition delay period and changes in accordance with this spray temperature. That is, the ignitability of fuel injected in the main injection is greatly affected by the spray temperature at the end of the physical ignition delay period. Therefore, the target spray temperature is specified based on the end of the physical ignition delay period of fuel injected in the main injection, and the fuel injection amount of the auxiliary injection is set such that the actual spray temperature at that time is brought close to the target spray temperature, and thereby a suitable adjustment of the in-cylinder preheating amount can be accomplished, and a favorable combustion state of fuel injected in the main injection can be achieved.

As for a means of obtaining the end of the physical ignition delay period, the time after the in-spray equivalence ratio of fuel injected in the main injection exceeds a specific in-spray combustible equivalence ratio and at which the in-spray equivalence ratio decreases to the in-spray combustible equivalence ratio is obtained as the end of the physical ignition delay period.

Accordingly, by directly identifying the actual spray state (an indicator of ease of ignition), it is possible to estimate the end of the physical ignition delay period. As a result, even when an environmental change, a transition of operation, or the like is present, the end of the physical ignition delay period can be estimated highly accurately.

In addition, as for another means of obtaining the end of the physical ignition delay period, the end of the physical ignition delay period may be obtained based on the engine speed, the engine load, and the gas state inside the cylinder.

In the case where the actual spray temperature at the specific time matches the target spray temperature, combustion of fuel injected in the main injection starts substantially at the same time when the specific time is reached (immediately after the chemical ignition delay period has elapsed). Accordingly, as for combustion of fuel injected in the main injection, premixed combustion is barely performed, and mostly diffusion combustion is performed. As a result, controlling the injection timing of main-injection injection substantially directly serves as controlling the start timing of diffusion combustion, making it possible to improve combustion controllability.

Preferably, the reference spray temperature is calculated based on the reference in-cylinder temperature, a fuel temperature (TspO) at an injection start time in the main injection, and a fuel injection amount thereof.

In this case, the fuel temperature at the injection start time in the main injection is calculated based on the fuel temperature before injection, the injection pressure of fuel, and the coolant temperature of the internal combustion engine.

On the other hand, as a means of calculating the fuel injection amount in the auxiliary injection, the fuel injection amount in the auxiliary injection is calculated based on the necessary preheating amount and the oxygen concentration inside the cylinder.

Preferably, the fuel injection amount in the auxiliary injection is corrected in accordance with at least one of a variation in the fuel injection amount in the auxiliary injection for each cylinder, a variation in the necessary preheating amount for each cylinder and variation the in-cylinder temperature at the reference time for each cylinder to calculate the final fuel injection amount.

[Effects of the Invention]

In the present invention, using as a target value a target spray temperature that is set in association with a specific time after performing the main injection, a fuel injection amount in the auxiliary injection is set so as to adjust the actual spray temperature at the specific time. Accordingly, the in-cylinder preheating amount can be suitably adjusted, making it possible to improve a fuel consumption rate and reduce combustion noises of fuel injected in the main injection.

[Brief Description of Drawings]

[FIG. 1]

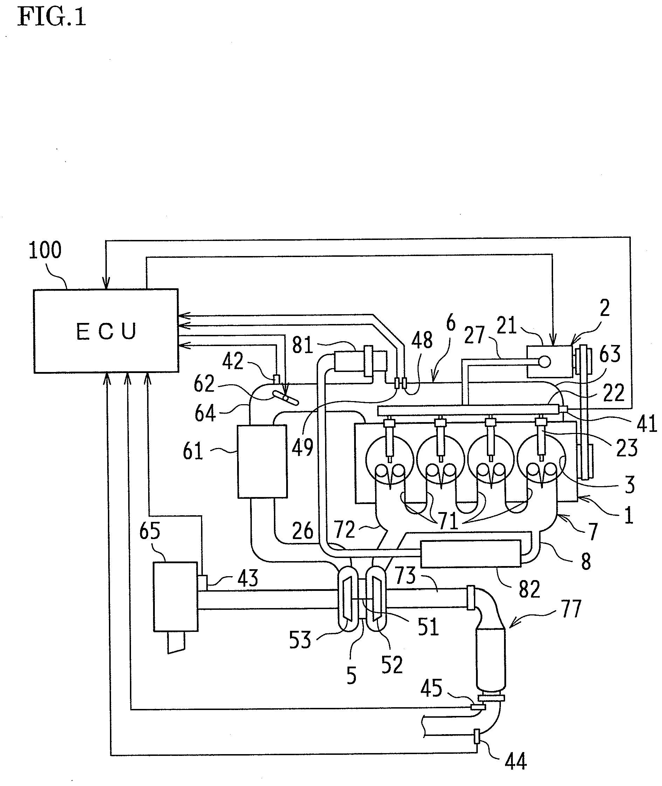

Fig. 1 is a schematic configuration diagram showing an engine and the control system thereof according to an embodiment.
[FIG. 2]

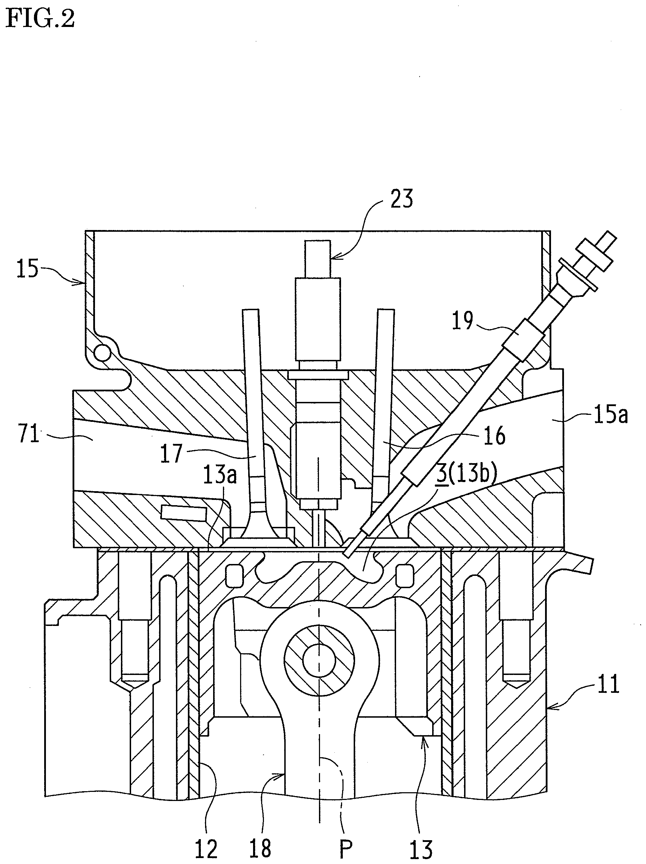

Fig. 2 is a cross-sectional diagram showing the combustion chamber of a diesel engine and its surroundings.
[FIG. 3]

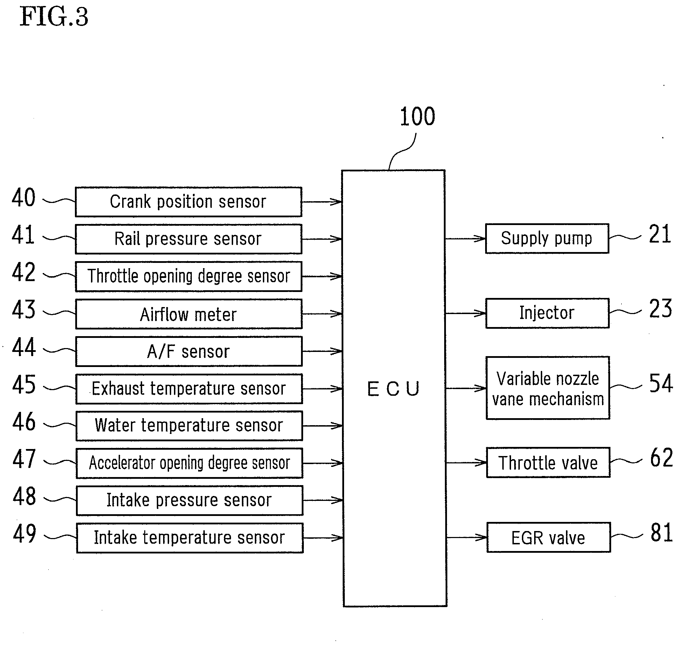

Fig. 3 is a block diagram showing the configuration of a control system such as an ECU.
[FIG. 4]

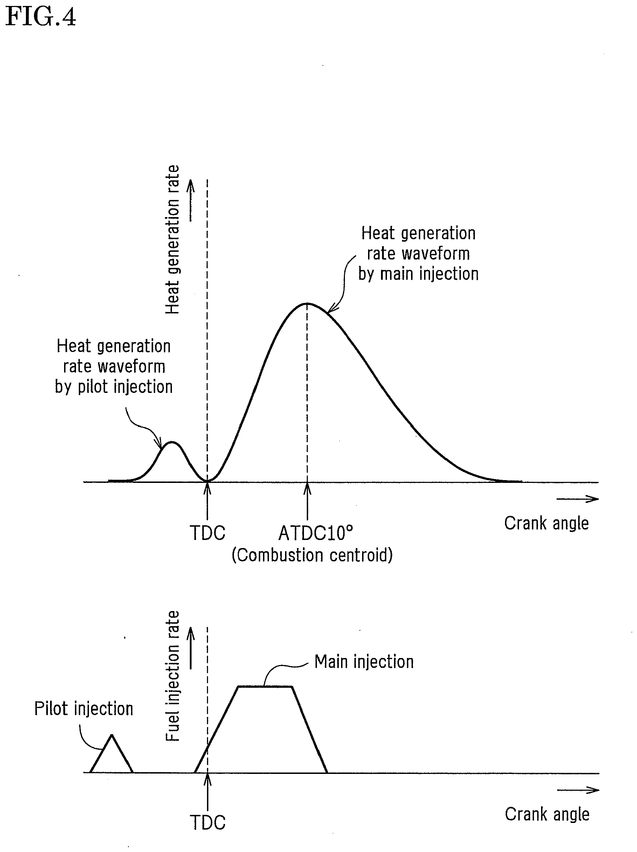

Fig. 4 shows waveform charts showing an example of a change of a heat generation rate (a heat generation amount per unit rotation angle of a crankshaft) and a change of a fuel injection rate (a fuel injection amount per unit rotation angle of a crankshaft) during a combustion stroke when ideal combustion is performed.
[FIG. 5]

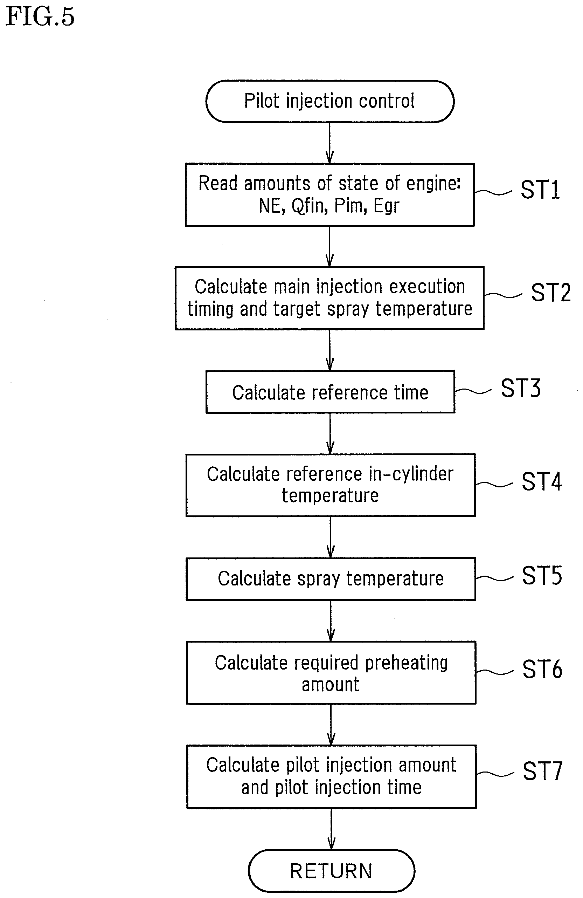

FIG. 5 is a flowchart showing the procedure of pilot injection control.
[FIG. 6]

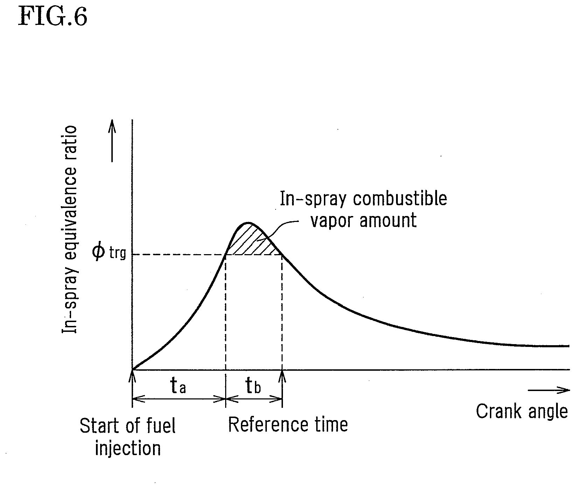

Fig. 6 is an explanation diagram for an operation to estimate the end of a physical ignition delay period.

[Mode for Carrying Out the Invention]

Embodiments of the present invention will now be described below with reference to the drawings. In the present embodiment, a case will be described in which the present invention is applied to a common rail in-cylinder direct injection multi-cylinder (for example, in-line four-cylinder) diesel engine (compression self-igniting internal combustion engine) mounted in an automobile.

- Engine Configuration -

First, the overall configuration of a diesel engine (referred to below as simply the engine) according to the present embodiment will now be described. Fig. 1 is a schematic configuration diagram of an engine 1 and a control system of the engine 1 according to the present embodiment. Fig. 2 is a cross-sectional diagram showing a combustion chamber 3 of the diesel engine and parts in the vicinity of the combustion chamber 3.

As shown in Fig. 1, the engine 1 according to the present embodiment is configured as a diesel engine system having a fuel supply system 2, combustion chambers 3, an intake system 6, an exhaust system 7, and the like as its main portions.

The fuel supply system 2 is provided with a supply pump 21, a common rail 22, injectors (fuel injection valves) 23, an engine fuel path 27, and the like.

The supply pump 21 draws fuel from a fuel tank, and after putting the drawn fuel under high pressure, supplies the fuel to the common rail 22 via the engine fuel path 27. The common rail 22 has a function as an accumulation chamber where the high pressure fuel is held (accumulated) at a specific pressure, and this accumulated fuel is distributed to the respective injectors 23. The injectors 23 are configured from piezo injectors within which a piezoelectric element (piezo element) is provided, and supply fuel by injection into the combustion chambers 3 by appropriately opening a valve.

The intake system 6 is provided with an intake manifold 63 connected to an intake port 15a formed in a cylinder head 15 (see Fig. 2), and an intake pipe 64 that constitutes an intake path is connected to the intake manifold 63. Also, in this intake path, an air cleaner 65, an airflow meter 43, and a throttle valve (intake-air throttle valve) 62 are disposed in order from the upstream side. The airflow meter 43 outputs an electrical signal in accordance with the amount of air that flows into the intake path via the air cleaner 65.

The exhaust system 7 is provided with an exhaust manifold 72 connected to exhaust ports 71 formed in the cylinder head 15, and an exhaust pipe 73 that constitutes an exhaust path is connected to the exhaust manifold 72. An exhaust emission purifier 77 is disposed in the exhaust path. The exhaust emission purifier 77 is provided with a catalyst (an NOx storage catalyst or an oxidation catalyst) and a DPF (Diesel Particulate Filter). As the exhaust emission purifier 77, a DPNR catalyst (Diesel Particulate-NOx Reduction catalyst) may be used.

Here, the combustion chamber 3 of the diesel engine and parts in the vicinity of the combustion chamber 3 will now be described with reference to Fig. 2. As shown in Fig. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide in the vertical directions.

The combustion chamber 3 is formed on the top side of a top face 13a of the piston 13. In other words, the combustion chamber 3 is defined by a lower face of the cylinder head 15 installed on top of the cylinder block 11, an inner wall face of the cylinder bore 12, and the top face 13a of the piston 13. A cavity (recess) 13b is concavely provided in substantially the center of the top face 13a of the piston 13, and this cavity 13b also constitutes part of the combustion chamber 3.

The piston 13 is linked via a connecting rod 18 to a crankshaft that is an engine output shaft. Thus, back and forth movement of the piston 13 within the cylinder bore 12 is transmitted to the crankshaft via the connecting rod 18, and engine output is obtained due to rotation of this crank shaft. Also, a glow plug 19 is disposed so as to face the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

In the cylinder head 15, the intake port 15a and the exhaust port 71 are formed, and an intake valve 16 that opens/closes the intake port 15a and an exhaust valve 17 that opens/closes the exhaust port 71 are disposed. Also, the injector 23 that injects fuel directly into the combustion chamber 3 is installed in the cylinder head 15. The injector 23 is disposed substantially in the center above the combustion chamber 3, in an erect orientation along the cylinder center line P, and injects fuel introduced from the common rail 22 toward the combustion chamber 3 at a specific timing.

Furthermore, as shown in Fig. 1, the engine 1 is provided with a turbocharger 5. This turbocharger 5 is equipped with a turbine wheel 52 and a compressor wheel 53 that are linked via a turbine shaft 51. The compressor wheel 53 is disposed so as to face the inside of the intake pipe 64, and the turbine wheel 52 is disposed so as to face the inside of the exhaust pipe 73. Thus the turbocharger 5 uses exhaust flow (exhaust pressure) received by the turbine wheel 52 to rotate the compressor wheel 53, thereby performing a so-called supercharging operation that increases the intake pressure. In this embodiment, the turbocharger 5 is a variable nozzle-type turbocharger, in which a variable nozzle vane mechanism (not shown) is provided on the turbine wheel 52 side, and by adjusting the opening of this variable nozzle vane mechanism it is possible to adjust the supercharging pressure of the engine 1.

An intercooler 61 for forcibly cooling intake air heated due to supercharging with the turbocharger 5 is provided in the intake pipe 64 of the intake system 6.

Also, the engine 1 is provided with an exhaust gas recirculation path (EGR path) 8 that connects the intake system 6 and the exhaust system 7. The EGR path 8 decreases the combustion temperature by appropriately directing part of the exhaust gas back to the intake system 6 and resupplying that exhaust gas to the combustion chamber 3, thus reducing the amount of NOx generated. Also, provided in the EGR path 8 are an EGR valve 81 that by being opened/closed steplessly under electronic control is capable of freely adjusting the flow rate of exhaust gas that flows through the EGR path 8, and an EGR cooler 82 for cooling exhaust that passes through (recirculates through) the EGR path 8. The EGR device (exhaust gas recirculating device) is configured with this EGR path 8, EGR valve 81, EGR cooler 82, and the like.

- Sensors -

Various sensors are installed at respective sites of the engine 1, and these sensors output signals related to environmental conditions at the respective sites and the operating state of the engine 1.

For example, the airflow meter 43 outputs a detection signal in accordance with the flow rate of intake air (the amount of intake air) on the upstream side of the throttle valve 62 within the intake system 6. An intake temperature sensor 49 is disposed in the intake manifold 63 and outputs a detection signal in accordance with the temperature of intake air. An intake pressure sensor 48 is disposed in the intake manifold 63 and outputs a detection signal in accordance with the intake air pressure. An A/F (air-fuel ratio) sensor 44 outputs a detection signal that continuously changes in accordance with the oxygen concentration in exhaust gas on the downstream side of the exhaust emission purifier 77 of the exhaust system 7. An exhaust temperature sensor 45 likewise outputs a detection signal in accordance with the temperature of exhaust gas (exhaust temperature) on the downstream side of the exhaust emission purifier 77 of the exhaust system 7. A rail pressure sensor 41 outputs a detection signal in accordance with the pressure of fuel accumulated in the common rail 22. A throttle opening degree sensor 42 detects the opening degree of the throttle valve 62.

- ECU -

An ECU 100 is provided with input-output circuits and a micro computer composed of a CPU, a ROM, a RAM, and the like that are not shown. As shown in Fig. 3, the input circuit of the ECU 100 is connected to the rail pressure sensor 41, the throttle opening degree sensor 42, the airflow meter 43, the A/F sensor 44, the exhaust temperature sensor 45, the intake pressure sensor 48, and the intake temperature sensor 49. Furthermore, the input circuit is connected to a water temperature sensor 46 that outputs a detection signal in accordance with the coolant temperature of the engine 1, an accelerator opening degree sensor 47 that outputs a detection signal in accordance with the amount of accelerator pedal depression, a crank position sensor 40 that outputs a detection signal (pulse) each time the output shaft (crankshaft) of the engine 1 rotates a specific angle, and the like.

On the other hand, the output circuit of the ECU 100 is connected to the supply pump 21, the injectors 23, the throttle valve 62, the EGR valve 81, and the variable nozzle vane mechanism 54 (an actuator that adjust the opening degree of the nozzle vanes) of the turbocharger 5.

The ECU 100 executes various types of control of the engine 1 based on output from the various types of sensors described above, calculation values obtained by an arithmetic expression using such output values, and the various types of maps stored on the ROM.

The ECU 100 executes pilot injection (auxiliary injection) and main injection (primary injection) as control of fuel injection of the injectors 23.

The pilot injection is an operation in which a small amount of fuel is injected from the injectors 23 prior to the main injection. The pilot injection is an injection operation for suppressing fuel ignition delay in the main injection and for leading to stable diffusion combustion, and is also called auxiliary injection. Also, the pilot injection in the present embodiment not only has the function to slow the initial combustion rate in the above-described main injection, but also has the preheating function to increase the temperature in a cylinder. That is, after the pilot injection is performed, fuel injection is suspended, and the temperature of compressed gas (the temperature in a cylinder) is sufficiently increased until the main injection is started so as to reach the self-igniting temperature of fuel (for example, 1000 K), and thereby favorable ignitability of fuel injected in the main injection is secured.

The main injection is an injection operation for generating torque of the engine 1 (operation of supplying fuel for torque generation). The fuel injection amount in the main injection is basically determined so as to obtain the torque required in accordance with the operating state such as the engine speed, the accelerator operation amount, the coolant temperature, the intake air temperature, and the like. For example, the greater the engine speed (engine speed calculated based on the detection value from the crank position sensor 40) or the greater the accelerator operation amount (the accelerator pedal depression amount sensed by the accelerator opening degree sensor 47) (i.e., the greater the accelerator opening degree), the greater the resulting torque requirement value of the engine 1, and the greater the fuel injection amount in the main injection is accordingly set.

Fuel injected in the main injection will start combustion after the physical ignition delay period and the chemical ignition delay period. At this time, in the case where preheating inside a cylinder is suitably performed through the pilot injection, fuel injected in the main injection will immediately start combustion after the chemical ignition delay period. That is, in a situation where preheating inside a cylinder is suitably attained as described above, premixed combustion is hardly performed, and mostly diffusion combustion is performed. As a result, controlling the injection timing of the main injection substantially directly serves as controlling the start timing of diffusion combustion, making it possible to greatly improve combustion controllability.

The physical ignition delay refers to a time necessary for fuel droplets to evaporate and mix, and it depends on the gas temperature in the combustion field. On the other hand, the chemical ignition delay refers to a time necessary for fuel vapor to chemically bond, decompose and oxidatively produce heat.

Regarding an example of a specific fuel injection mode, the pilot injection (fuel injection from a plurality of injection ports formed in the injector 23) is performed before the piston 13 reaches the compression top dead center, fuel injection is suspended, and after a specific interval, the main injection is performed when the piston 13 reaches the vicinity of the compression top dead center. Accordingly, fuel burns due to self ignition, and the energy generated by this combustion then becomes kinetic energy for pressing the piston 13 down toward the bottom dead center (energy that is to serve as engine output), thermal energy for raising the temperature in the combustion chamber 3, and thermal energy that is dissipated to the outside (e.g., coolant) via the cylinder block 11 and the cylinder head 15.

Details of a technique for setting the fuel injection amount and the fuel injection timing for the pilot injection and the fuel injection timing for the main injection will be described below.

In the diesel engine 1, it is important to concurrently satisfy demands such as improving exhaust emissions by suppressing the amount of NOx generated and the amount of smoke generated, reducing combustion noises during a combustion stroke, and ensuring sufficient engine torque. As a technique to concurrently satisfy such demands, appropriately controlling the changing state of the heat generation rate (a changing state expressed as a heat generation rate waveform) in a cylinder during a combustion stroke is effective.

In the upper waveform shown in Fig. 4, the horizontal axis represents the crank angle, and the vertical axis represents the heat generation rate, indicating an example of an ideal heat generation rate waveform regarding the combustion of fuel injected in the main injection and the pilot injection. In the figure, "TDC" indicates a crank angle position corresponding to the compression top dead center of the piston 13. The lower waveform shown in Fig. 4 is a waveform of the injection rate of fuel injected from the injectors 23 (the fuel injection amount per unit rotation angle of the crankshaft).

In the heat generation waveform, for example, the combustion of fuel injected in the main injection is started when the piston 13 is in the vicinity of the compression top dead center (TDC), the heat generation rate reaches its maximum value (peak value) at a specific piston position after the compression top dead center of the piston 13 (e.g., a point 10 degrees after the compression top dead center (10° ATDC)), and furthermore the combustion of fuel injected in the main injection ends at another specific piston position after the compression top dead center (e.g., a point 25 degrees after the compression top dead center (25° ATDC)). Executing the combustion of an air-fuel mixture in such a heat generation rate changing state creates a situation where the combustion of 50% of the air-fuel mixture present in a cylinder is complete at 10 degrees after the compression top dead center (10° ATDC). In other words, with a point 10 degrees after the compression top dead center (10° ATDC) serving as a combustion centroid, about 50% of the total amount of heat generated in an combustion stroke is generated no later than 10° ATDC, and the engine 1 can be operated with high thermal efficiency.

In a condition where combustion in accordance with such an ideal heat generation rate waveform is preformed, sufficient preheating within a cylinder is performed by pilot injection, and due to this preheating, fuel injected in the main injection is immediately exposed to a temperature environment having a temperature higher than or equal to the self-igniting temperature after being injected, and thus combustion starts after the physical ignition delay period and the chemical ignition delay period.

In addition to the above-described pilot injection and main injection, after-injection and post-injection are performed as necessary. Since the functions of these types of injection are well known, descriptions are omitted here.

The ECU 100 also controls the opening degree of the EGR valve 81 in accordance with the operating state of the engine 1 to adjust the amount of exhaust gas recirculated towards the intake manifold 63 (EGR amount). The EGR amount is set in accordance with an EGR map that is created through experimentation and simulation and stored on the ROM in advance. The EGR map is a map for determining the EGR amount (EGR rate) using the engine speed and the engine load as parameters.

The fuel injection pressure when executing fuel injection is determined in accordance with the internal pressure of the common rail 22. In regard to the internal pressure of the common rail, normally, the higher the engine load and the greater the engine speed, the greater the target value for the pressure of fuel supplied from the common rail 22 to the injectors 23, i.e., the target rail pressure. This target rail pressure is set according to a fuel pressure setting map stored on, for example, the ROM. In the present embodiment, the fuel pressure is adjusted in accordance with the engine load or the like so as to be between 30 MPa and 200 MPa.

Also, as a feature of the present embodiment, the ECU 100 executes pilot injection control for a suitable adjustment of a pilot injection amount and a pilot injection time. Hereinbelow, the pilot injection control will now be described.

- Pilot Injection Control -

As for an outline of the pilot injection control, a pilot injection amount is calculated such that a spray temperature at a specific time after the main injection has started matches or is brought close to a preemptively set target spray temperature (such that the actual spray temperature is adjusted using this target spray temperature as a target value), and pilot injection is performed in this pilot injection amount so as to attain a suitable adjustment of an in-cylinder preheating amount (a fuel injection amount setting operation for the auxiliary injection by an auxiliary injection setting means). Also, a pilot injection time in accordance with this calculated pilot injection amount is calculated, and pilot injection is performed at this pilot injection time.

The spray temperature of a specific time after the main injection has started is obtained as an average temperature inside the spray. The fuel injection pressure of the common rail diesel engine 1 according the present embodiment is high (for example, 100 MPa or greater during normal traveling), and therefore, regarding fuel injected from the injector 23, fuel droplets are highly dispersed substantially throughout the spray of the fuel (spray formed in a substantially conical shape), and the distribution of fuel droplets in the outer edge portion and the central portion of the spray is substantially uniform. Accordingly, the temperature of the entire spray is substantially uniform, and it is thus possible to calculate a reference spray temperature with an arithmetic expression that will be described below.

A specific time after performing the main injection is defined as the end of the physical ignition delay period of fuel injected in the main injection (a method for estimating the end of the physical ignition delay period of fuel will be described below).

As stated above, the target spray temperature is specified based on the end of the physical ignition delay period of fuel injected in the main injection, and the pilot injection amount is set such that the actual spray temperature is brought close to the target spray temperature, and a reason therefor will now be described as follows. The physical ignition delay period of fuel is a time necessary for fuel droplets to evaporate and mix, and it is possible that the physical ignition delay period is greatly affected by the temperature inside a cylinder and the spray state (in-spray equivalence ratio and the like) and greatly changes in accordance with such parameters. In contrast, the chemical ignition delay period is a time necessary for fuel vapor evaporated and mixed in the physical ignition delay period to undergo chemical bonding, decomposition, and oxidative heat production, and the chemical ignition delay period is greatly affected by the spray temperature at the end of the physical ignition delay period and changes in accordance with this spray temperature. That is, the ignitability of fuel injected in the main injection is greatly affected by the spray temperature at the end of the physical ignition delay period. Therefore, the target spray temperature is specified based on the end of the physical ignition delay period of fuel injected in the main injection, and the pilot injection amount is set such that the actual spray temperature, is brought close to the target spray temperature, thus enabling a suitable adjustment of the in-cylinder preheating amount.

The target spray temperature at the specific time is defined as a spray temperature at which fuel injected in the main injection starts combustion in an extremely short period of time after being injected and most of the fuel undergoes diffusion combustion as described above, and which is a self ignitable temperature (for example, the minimum temperature within the self ignitable temperature range) of fuel. Furthermore, the target spray temperature is defined while taking in consideration the in cylinder temperature and a temperature decrease caused by the heat absorption of fuel injected in the main injection. The reference spray temperature is calculated based on the initial spray temperature (the fuel temperature when the main injection is started) of fuel injected from the injector 23 (main injection) and the in-cylinder temperature at the specific time (hereinafter referred to as a "reference in-cylinder temperature"). Details thereof will be described below.

Hereinafter, a specific description of pilot injection control will now be provided in reference to the flowchart of Fig. 5. The procedure of this flowchart is executed repeatedly every few milliseconds or every time a combustion stroke is performed after the engine 1 is started.

First, the amounts of state of the engine 1 are read in step ST1. Specifically, an engine speed NE, an engine load Qfin, a boost pressure Pim of intake air, and an EGR rate Egr are read. The engine speed NE is calculated based on the detection value of the crank position sensor 40. The engine load Qfin is calculated based on, for example, an accelerator depression amount sensed by the accelerator opening degree sensor 47. The boost pressure Pim is obtained based on an output signal of the intake air pressure sensor 48. The EGR rate Egr is obtained from a command value of an EGR rate set in accordance with the EGR map.

Thereafter, the procedure advances to step ST2, and a main injection execution timing is calculated from the amounts of operating state of the engine 1, and a target spray temperature Tsptrg at the end of the physical ignition delay period of fuel injected in the main injection is calculated. This main injection execution timing and target spray temperature Tsptrg are retrieved as values for achieving combustion represented by the aforementioned ideal heat generation rate waveform from maps that have been prepared through experimentation and simulation and that have been stored on the ROM in advance. That is, the respective maps for determining the main injection execution timing and the target spray temperature Tsptrg using the amounts of operating state such as the engine speed NE, the engine load Qfin, the boost pressure Pim of intake air, and the EGR rate Egr as parameters are stored on the ROM, and the main injection execution timing and the target spray temperature Tsptrg are retrieved from these maps. The main injection execution timing and the target spray temperature Tsptrg may be calculated with specific arithmetic expressions that use the aforementioned respective amounts of operating state as parameters.

Next, the procedure advances to step ST3, and the specific time (the end of the physical ignition delay period of fuel injected in the main injection; hereinafter referred to as a "reference time $\theta 0$") is calculated. The reference time $\theta 0$ is the end time of the physical ignition delay period of fuel injected in the main injection as stated above. As for techniques for obtaining the end time of a physical ignition delay period, well-known techniques and the technique disclosed in document EP 2 626 540 A1 are usable.

For example, the technique disclosed in document EP 2 626 540 A1 estimates the end of a physical ignition delay period based on the equivalence ratio in fuel spray. A specific description will now be provided using Fig. 6. Fig. 6 is a diagram showing a change of the equivalence ratio in fuel spray (hereinafter referred to as an "in-spray equivalence ratio") after fuel injection has started. As shown in Fig. 6, the period from the time at which fuel injection is started and until the time at which the equivalence ratio in the spray of injected fuel reaches an ignitable value (in-spray combustible equivalence ratio $\varphi_{trg}$ (for example, 0.7)) and the combustible vapor amount in the spray (an in-spray combustible vapor amount) reaches an ignitable value (a minimal required combustible vapor amount) and then the in-spray equivalence ratio decreases to or below the in-spray combustible equivalence ratio is regarded as the physical ignition delay period, and the time at which the in-spray equivalence ratio decreases to or below the in-spray combustible equivalence ratio is estimated to be the end of the physical ignition delay period (reference period $\theta 0$). The in-spray combustible equivalence ratio $\varphi_{trg}$ is not limited to the aforementioned value. In the case where the in-spray equivalence ratio changes as shown in Fig. 6, the period after fuel injection is started and until the in-spray equivalence ratio reaches the in-spray combustible equivalence ratio $\varphi_{trg}$ is referred to as ta in the diagram, thereafter the period until the in-spray equivalence ratio decreases to the in-spray combustible equivalence ratio $\varphi_{trg}$ is referred to as tb in the diagram, the sum of these (ta + tb) is calculated as a physical ignition delay period, and the end time of this period tb is estimated to be the end of the physical ignition delay period (reference time $\theta 0$). As for a specific calculation operation for the in-spray equivalence ratio, the in-spray equivalence ratio can be obtained based on the value obtained by dividing the amount of fuel in spray by the volume of the spray (an amount obtained by dividing the fuel amount obtained from a fuel injection amount command value by the number of injection ports). The volume of the spray is calculated with a well-known arithmetic expression (such as "Hiroyasu's equation"). Also, it is possible that the physical ignition delay period is calculated from the engine speed NE, the engine load Qfin, and the gas state in a cylinder (a gas state determined by an in-cylinder oxygen concentration, a fuel injection pressure, or the like determined by the intake air boost pressure Pim, the EGR rate Egr, or the like) and the end of the physical ignition delay period (reference time $\theta 0$) is obtained.

After obtaining the reference time $\theta 0$ in this manner, the procedure advances to step ST4, and the in-cylinder temperature at the reference time $\theta 0$ (hereinafter referred to as a "reference in-cylinder temperature Tcyl ($\theta 0$)") is calculated. The reference in-cylinder temperature Tcyl ($\theta 0$) can be calculated based on for example, the intake air temperature sensed by the intake temperature sensor 49, the valve closure timing of the intake valve 16, specifications of the engine 1 (such as a compression ratio and a cylinder bore), the crankshaft rotation angle position, and the like. Also, it is possible to calculate an in-cylinder temperature (T) by providing in advance an in-cylinder pressure sensor capable of sensing an in-cylinder pressure, and applying the in-cylinder pressure sensed by the in-cylinder pressure sensor to a well-known gas state equation (PV = nRT). Here, an in-cylinder volume (V) is determined by specifications of the engine 1 (such as a compression ratio and a cylinder bore), a crankshaft rotation angle position, and the like. An amount of substance of gas (n) and a gas constant (R) are obtained based on the intake air volume sensed by the air flow meter 43, the outside air temperature, the fuel injection amount from the injector 23, or the like.

After the reference in-cylinder temperature Tcyl ($\theta 0$) is obtained as above, the procedure advances to step ST5, and the spray temperature at the reference time $\theta 0$ (hereinafter referred to as a "reference spray temperature Tsp ($\theta 0$)") is calculated. The reference spray temperature Tsp ($\theta 0$) is calculated with formula (1) below.

$$\text{Tsp } (\theta 0) = \text{Tcyl } (\theta 0) - \text{Tsp0} \cdot \text{k} \cdot \text{Qinj} \dots (1)$$

where Tsp0 is an initial spray temperature, k is an injection amount factor, and Qinj is a fuel injection amount in the main injection. The fuel injection amount Qinj is determined so as to obtain the torque required in accordance with the engine speed, the accelerator operation amount, the coolant temperature, the intake air temperature, and the like as stated above (given as a fuel injection amount command value). The initial spray temperature Tsp0 is calculated with formula (2) below.

$$Tsp0 = f(thf, pcr, thw) \ ...(2)$$

where thf is a fuel temperature (the fuel temperature prior to injection), per is a fuel injection pressure, and thw is a coolant temperature.

The fuel temperature thf is a fuel temperature at the time fuel injection starts from the injector 23, and it is sensed by a temperature sensor (not shown) or calculated by correcting the injector member temperature by substituting the water temperature for the amount of heat received from the path inside the injector and the engine 1 using the temperature at the inlet of the supply pump 21 as a reference, and adding thereto the amount of a temperature increase due to injection. The fuel injection pressure per is obtained based on the output signal of the rail pressure sensor 41. The coolant temperature thw is obtained based on the output signal of the water temperature sensor 46. The operation f is obtained in advance through experimentation or simulation.

As is clear from the formula (1), the reference spray temperature Tsp ($\theta 0$) calculated with the formula (1) is calculated by subtracting the temperature decrease due to fuel from the reference in-cylinder temperature Tcyl ($\theta 0$), which is the in-cylinder temperature at the reference time $\theta 0$. That is, the reference spray temperature Tsp ($\theta 0$) is calculated while taking in consideration the latent heat of fuel injected in the main injection.

Then, the procedure advances to step ST6, and a preheating amount inside a cylinder required in the pilot injection (hereinafter referred to as a "required pilot preheating amount Qprq"; a required preheating amount as referred to herein) is calculated. The required pilot preheating amount Qprq is calculated with formula (3) below.

$$Qprq = g(Tsptrg, Tsp(\theta 0)) \ ... (3)$$

The operation g also is obtained in advance through experimentation or simulation.

The required pilot preheating amount Qprq obtained here is calculated as a value that provides an in-cylinder preheating amount with which the actual spray temperature matches or is brought close the target spray temperature Tsptrg. That is, the required pilot preheating amount Qprq is calculated as a value upward-corrected to the extent of the amount of energy corresponding to the shortfall of the reference spray temperature Tsp ($\theta 0$) relative to the target spray temperature Tsptrg.

After the required pilot preheating amount Qprq is calculated in this manner, the procedure advances to step ST7, and a pilot injection amount Qpl and a pilot injection time are calculated. The pilot injection amount Qpl is calculated with formula (4) below.

$$Qpl = h(Qprq, O_2con) \ ...(4)$$

where, $O_2con$ is the oxygen concentration inside the cylinder. The oxygen concentration $O_2con$ is calculated based on the outside air temperature, the intake air amount, the boost pressure, the EGR rate, and the like. The outside air temperature is obtained based on the output signal of an outside air temperature sensor (not shown). The intake air amount is obtained based on the output signal of the air flow meter 43. The boost pressure is obtained based on the output signal of the intake pressure sensor 48. The EGR rate Egr is obtained from a command value of an EGR rate set in accordance with the EGR map. In order for fuel injected in the main injection to burn, the oxygen concentration required for the in-cylinder oxygen concentration $O_2con$ needs to be ensured. Accordingly, various control parameters are controlled in advance so as to ensure the required oxygen concentration. The operation h also is obtained in advance through experimentation or simulation.

The pilot injection time is set so as to be a time for which combustion of substantially the entire amount of the above-calculated pilot injection amount Qpl is completed by the reference time $\theta 0$ (the end of the physical ignition delay period of fuel injected in the main injection) and is set so as to be at a timing that enables the required pilot preheating amount Qprq at the reference time $\theta 0$ to be ensured. Specifically, a map that sets a pilot injection time in accordance with the pilot injection amount Qpl is produced through experimentation and simulation in advance and stored on the ROM, and by applying the pilot injection amount Qpl to this map, the pilot injection time is retrieved. Also, the pilot injection time may be calculated with a specific arithmetic expression in accordance with the pilot injection amount Qpl.

Regarding the calculation of the pilot injection amount Qpl, in order to cope with a variation in the pilot injection amount Qpl for each cylinder due to the individual difference of the respective injectors 23, a variation in the required pilot preheating amount Qprq, and a variation in the reference in-cylinder temperature Tcyl ($\theta 0$) (due to a variation in the compression ratio or the like), such variations may be preemptively stored or kept after learning on the ROM as data specific for each of the cylinders, and a final pilot injection amount and a final pilot injection time may be calculated by performing a correction in accordance with the data specific for each of the cylinders on the pilot injection amount Qpl and the pilot injection time calculated as stated above.

Also, the final pilot injection amount and the final pilot injection time may be calculated by performing a correction on the pilot injection amount Qpl and the pilot injection time in accordance with a variation in the fuel injection amount obtained by well-known minute fuel injection amount learning control (control for learning whether or not there is a difference in fuel injection amount, when performing injection of a minute amount of fuel while the engine 1 is not under load, by determining whether or not the amount of change of an engine operation state matches a specified amount of change).

The pilot injection amount and the final pilot injection time calculated in the above-described manner can be reflected in the pilot injection in the next cylinder on which a combustion stroke is performed after the cylinder for which the end of the physical ignition delay period has been calculated, or can be reflected in the pilot injection in the next combustion stroke (in the case of a 4-cylinder engine, 4 combustion strokes later) in the same cylinder (the cylinder for which the end of the physical ignition delay period has been calculated). Also, by estimating the end of the physical ignition delay period from the gas state at the valve closure of the intake valve 16 or each fuel injection mode on the cylinder, they can be reflected in the pilot injection in the cylinder (the cylinder for which the end of the physical ignition delay period has been estimated).

The above-described operations are repeated, and the spray temperature at the end (the reference time ($\theta$0)) of the physical ignition delay period of fuel injected in the main injection matches or is brought close to the target spray temperature Tsptrg, and thus it is possible to obtain favorable ignitability of fuel injected in the main injection as well as an ideal combustion state (for example, a combustion state with which a heat generation rate waveform as shown in Fig. 4 can be obtained). As a result, it is possible to concurrently satisfy demands such as improving exhaust emissions by suppressing the amount of NOx generated and the amount of smoke generated, reducing combustion noises during a combustion stroke, and ensuring sufficient engine torque. Also, correcting the pilot injection amount Qpl and the pilot injection time in accordance with, for example, the aforementioned data specific for each cylinder enables a variation in ignition time between the respective cylinders to be eliminated and a stable operating state of the engine 1 to be obtained.

- Other Embodiments -

In the embodiment described above, a case has been described in which the present invention is applied to an in-line four-cylinder diesel engine mounted in an automobile. The present invention is not limited to use in an automobile, and is applicable also to engines used in other applications. Also, there is no particular limitation on the number of cylinders or the engine type (classified as an in-line engine, V engine, horizontally opposed engine, and so forth).

In addition, in the embodiment described above, the target spray temperature Tsptrg is specified and the reference spray temperature Tsp ($\theta$0) is obtained using the end of the physical ignition delay period of fuel injected in the main injection as the reference time $\theta$0. Departing from the invention as claimed, the reference time $\theta$0 might also be specified to be on the angle of advance side or the angle of delay side by a specific crank angle relative to the end of the physical ignition delay period of fuel injected in the main injection, or the reference time $\theta$0 might also be specified based on the chemical ignition delay period. Also departing from the invention as claimed, the time when the crankshaft has rotated by a specific crank angle or the time when a specific period of time has elapsed after the start of the main injection might be specified as the reference time $\theta$0.

For the embodiment above, a description was provided of the engine 1 to which piezo injectors 23, which attain full valve opening only when an electric current is applied and thus changes the fuel injection rate, but the present invention is also applicable to engines to which variable injection rate injectors are applied.

[Industrial Applicability]

The present invention is applicable to a common rail in-cylinder direct injection multi-cylinder diesel engine mounted in an automobile to control for a suitable adjustment of the injection amount of pilot injection.

[Reference Signs List]

| | |
|---|---|
| 1 | Engine (internal combustion engine) |
| 12 | Cylinder bore |
| 23 | Injector (fuel injection valve) |
| 100 | ECU |
| Tsptrg | Target spray temperature |
| $\theta$0 | Reference time (specific time) |

| Tsp ($\theta 0$) | Reference spray temperature |
|---|---|
| Tsp0 | Initial spray temperature |
| Tcyl ($\theta 0$) | Reference in-cylinder temperature |
| Qprq | Required pilot preheating amount (required preheating amount) |
| Qpl | Pilot injection amount |
| $\varphi_{trg}$ | In-spray combustible equivalence ratio |
| Qinj | Fuel injection amount |
| thf | Fuel temperature |
| pcr | Fuel injection pressure |
| thw | Coolant temperature |

**Claims**

1. A control apparatus (100) for a compression self-igniting internal combustion engine (1)

    in which at least a main injection and an auxiliary injection that is performed prior to the main injection can be performed as fuel injection from a fuel injection valve (23) into a cylinder (12),
    the control apparatus (100) comprising an auxiliary-injection amount setting means,
    **characterized in that,**
    the control apparatus is configured to set, as a target spray temperature (Tsptrg), an ignitable temperature of fuel that is injected in the main injection in association with a reference time ($\theta 0$) after performing the main injection, and furthermore to set an auxiliary injection amount in accordance with a shortfall of a reference spray temperature (Tsp ($\theta 0$)) relative to the target spray temperature (Tsptrg),
    the reference spray temperature (Tsp ($\theta 0$)) being an average temperature inside the spray at the reference time ($\theta 0$),
    the auxiliary-injection amount setting means is configured to set the auxiliary injection amount by the following steps (a) to (f):

        (a) calculating the target spray temperature (Tsptrg) from an amount of an operating state of the internal combustion engine (1) as a parameter, by using maps that have been prepared through experimentation and simulation or by using arithmetic expressions;
        (b) calculating the reference time ($\theta 0$) being the end time of a physical ignition delay period that is a time necessary for fuel droplets injected in the main injection to evaporate and mix;
        (c) calculating a reference in cylinder temperature (Tcyl($\theta 0$)) at the reference time ($\theta 0$);
        (d) calculating the reference spray temperature (Tsp($\theta 0$)) by subtracting, from the reference in-cylinder temperature (Tcyl $\theta 0$)), a temperature decrease due to a determined fuel injection amount in the main injection by using an arithmetic expression;
        (e) calculating a required preheating amount (Qprq), which is an in-cylinder preheating amount required from the auxiliary injection, as a value upward-corrected to the extent of an amount of energy corresponding to a shortfall of the reference spray temperature (Tsp($\theta 0$)) relative to the target spray temperature (Tsptrg); and
        (f) calculating the auxiliary fuel injection amount (Qpl) based on the required preheating amount (Qprq), and the calculated auxiliary fuel injection amount (Qpl) that is set by the auxiliary injection amount setting means is reflected in the auxiliary injection in the internal combustion engine (1).

2. The control apparatus (100) according to claim 1, wherein
    the end of the physical ignition delay period is obtained as a time after an in-spray equivalence ratio of fuel injected in the main injection exceeds a specific in-spray combustible equivalence ratio ($\varphi$trg) and at which the in-spray equivalence ratio decreases to the in-spray combustible equivalence ratio ($\varphi$trg).

3. The control apparatus (100) according to claim 1, wherein
    the end of the physical ignition delay period is obtained based on an engine speed, an engine load, and an in-cylinder gas state.

4. The control apparatus (100) according to any one of claims 1 to 3, wherein
    the reference spray temperature (Tsp($\theta 0$)) is calculated based on the reference in-cylinder temperature (Tcyl($\theta 0$)), a fuel temperature (TspO) at an injection start time in the main injection, and a fuel injection amount (Qinj) thereof.

**5.** The control apparatus (100) according to claim 4, wherein
the fuel temperature at the injection start time in the main injection is calculated based on a fuel temperature (thf) before injection, an injection pressure (pcr) of fuel, and a coolant temperature (thw) of the internal combustion engine (1).

**6.** The control apparatus (100) according to any one of claims 1 to 5, wherein
the auxiliary injection amount setting means is configured so as to calculate the auxiliary fuel injection amount (Qpl) based on the required preheating amount (Qprq) and an oxygen concentration ($O_2$con) in the cylinder.

**7.** The control apparatus (100)according to any one of claims 1 to 6, wherein
the auxiliary injection amount setting means is configured so as to correct the auxiliary fuel injection amount (Qpl) in accordance with at least one of a variation in a fuel injection amount in the auxiliary injection for each cylinder, a variation in the required preheating amount for each cylinder, and a variation in an in-cylinder temperature at the reference time for each cylinder.


**Patentansprüche**

**1.** Steuervorrichtung (100) für eine selbstzündende verdichtende Brennkraftmaschine (1),

in der zumindest eine Haupteinspritzung und eine Hilfseinspritzung, die vor der Haupteinspritzung durchgeführt wird, als Kraftstoffeinspritzung von einem Kraftstoffeinspritzventil (23) in einen Zylinder (12) durchgeführt werden kann,
wobei die Steuervorrichtung (100) ein Mittel zum Einstellen der Hilfseinspritzmenge umfasst,
**dadurch gekennzeichnet, dass**,
die Steuervorrichtung konfiguriert ist, als Sollnebeltemperatur (Tsptrg) eine zündfähige Temperatur des Kraftstoffs einzustellen, der bei der Haupteinspritzung in Verbindung mit einer Bezugszeit ($\theta0$) nach der Durchführung der Haupteinspritzung eingespritzt wird, und außerdem eine Hilfseinspritzmenge in Übereinstimmung mit einer Unterschreitung einer Bezugsnebeltemperatur (Tsp ($\theta0$)) relativ zu der Sollnebeltemperatur (Tsptrg) einzustellen,
wobei die Bezugsnebeltemperatur (Tsp ($\theta0$)) eine durchschnittliche Temperatur innerhalb des Nebels zum Bezugszeitpunkt ($\theta0$) ist,
das Mittel zum Einstellen der Hilfseinspritzmenge konfiguriert ist, um die Hilfseinspritzmenge durch die folgenden Schritte (a) bis (f) einzustellen:

(a) Berechnen der Sollnebeltemperatur (Tsptrg) aus einem Betrag eines Betriebszustands des Verbrennungsmotors (1) als Parameter unter Verwendung von Kennfeldern, die durch Versuch und Simulation erstellt wurden, oder unter Verwendung arithmetischer Ausdrücke;
(b) Berechnen der Bezugszeit ($\theta0$), die die Endzeit eines physikalischen Zündverzögerungszeitraums ist, die eine Zeit ist, die notwendig ist, damit die bei der Haupteinspritzung eingespritzten Kraftstofftröpfchen verdampfen und sich vermischen;
(c) Berechnen einer Bezugstemperatur in dem Zylinder (Tcyl($\theta0$)) zum Bezugszeitpunkt ($\theta0$);
(d) Berechnen der Bezugsnebeltemperatur (Tsp($\theta0$)) durch Subtrahieren einer Temperaturabnahme aufgrund einer bestimmten Kraftstoffeinspritzmenge bei der Haupteinspritzung unter Verwendung eines arithmetischen Ausdrucks von der Bezugszylinderinnentemperatur (Tcyl($\theta0$));
(e) Berechnen einer erforderlichen Vorwärmmenge (Qprq), die eine von der Hilfseinspritzung benötigte Vorwärmmenge in dem Zylinder ist, als ein Wert, der in dem Ausmaß einer Energiemenge nach oben korrigiert ist, die einer Unterschreitung der Bezugsnebeltemperatur (Tsp($\theta0$)) relativ zu der Sollnebeltemperatur (Tsptrg) entspricht; und
(f) Berechnen der Hilfskraftstoffeinspritzmenge (Qpl) auf der Grundlage der erforderlichen Vorwärmmenge (Qprq), und die berechnete Hilfskraftstoffeinspritzmenge (Qpl), die durch das Mittel zum Einstellen der Hilfseinspritzmenge eingestellt wird, in der Hilfseinspritzung in der Brennkraftmaschine (1) widergespiegelt ist.

**2.** Steuervorrichtung (100) nach Anspruch 1, wobei
das Ende des physikalischen Zündverzögerungszeitraums als ein Zeitpunkt erhalten wird, nachdem ein Äquivalenzverhältnis im Nebel des bei der Haupteinspritzung eingespritzten Kraftstoffs ein spezifisches Kraftstoff-Äquivalenzverhältnis ($\varphi$trg) im Nebel überschreitet und bei dem das Äquivalenzverhältnis im Nebel auf das Kraftstoff-

Äquivalenzverhältnis (φtrg) im Nebel abfällt.

3. Steuervorrichtung (100) nach Anspruch 1, wobei
das Ende des physikalischen Zündverzögerungszeitraums auf der Grundlage einer Motordrehzahl, einer Motorlast und eines Gaszustands im Zylinder ermittelt wird.

4. Steuervorrichtung (100) nach einem der Ansprüche 1 bis 3, wobei die Bezugsnebeltemperatur (Tsp(θ0)) auf der Grundlage der Bezugszylinderinnentemperatur (Tcyl(θ0)), einer Kraftstofftemperatur (TspO) zu einer Einspritzstartzeit bei der Haupteinspritzung und einer Kraftstoffeinspritzmenge (Qinj) berechnet wird.

5. Steuervorrichtung (100) nach Anspruch 4, wobei
die Kraftstofftemperatur zum Einspritzstartzeitpunkt bei der Haupteinspritzung auf der Grundlage einer Kraftstofftemperatur (thf) vor der Einspritzung, eines Einspritzdrucks (pcr) von Kraftstoff und einer Kühlmitteltemperatur (thw) der Brennkraftmaschine (1) berechnet wird.

6. Steuervorrichtung (100) nach einem der Ansprüche 1 bis 5, wobei das Mittel zum Einstellen der Hilfseinspritzmenge so konfiguriert ist, dass es die Hilfskraftstoffeinspritzmenge (Qpl) auf der Grundlage der erforderlichen Vorwärmmenge (Qprq) und einer Sauerstoffkonzentration (O2con) in dem Zylinder berechnet.

7. Steuervorrichtung (100) nach einem der Ansprüche 1 bis 6, wobei
das Mittel zum Einstellen der Hilfseinspritzmenge so konfiguriert ist, dass es die Hilfskraftstoffeinspritzmenge (Qpl) in Übereinstimmung mit mindestens einer Änderung einer Kraftstoffeinspritzmenge bei der Hilfseinspritzung für jeden Zylinder, einer Änderung der erforderlichen Vorwärmmenge für jeden Zylinder und einer Änderung einer Zylinderinnentemperatur zur Bezugszeit für jeden Zylinder korrigiert.

**Revendications**

1. Appareil de commande (100) pour un moteur à combustion interne à auto-allumage par compression (1)

dans lequel au moins une injection principale et une injection auxiliaire qui est réalisée avant l'injection principale peuvent être réalisées comme injection de carburant à partir d'un robinet d'injection de carburant (23) dans un cylindre (12),
l'appareil de commande (100) comprenant un moyen de réglage de quantité d'injection auxiliaire,
**caractérisé en ce que**,
l'appareil de commande est configuré pour régler, comme température de pulvérisation cible (Tsptrg), une température d'allumage de carburant injecté dans l'injection principale en association avec un moment de référence (θ0) après la réalisation de l'injection principale, et pour régler en outre une quantité d'injection auxiliaire en fonction d'un manque à gagner d'une température de pulvérisation de référence (Tsp (θ0)) par rapport à la température de pulvérisation cible (Tsptrg),
la température de pulvérisation de référence (Tsp (θ0)) étant une température moyenne à l'intérieur du jet au moment de référence (θ0),
le moyen de réglage de quantité d'injection auxiliaire est configuré pour régler la quantité d'injection auxiliaire par les étapes (a) à (f) suivantes :

(a) calculer la température de pulvérisation cible (Tsptrg) à partir d'une quantité d'un état de fonctionnement du moteur à combustion interne (1) comme paramètre, en utilisant des cartes qui ont été préparées par expérimentation et simulation ou en utilisant des expressions arithmétiques ;
(b) calculer le moment de référence (θ0) qui est le moment de fin d'une période de retard d'allumage physique qui est un temps nécessaire pour que les gouttelettes de carburant injectées dans l'injection principale s'évaporent et se mélangent ;
(c) calculer une température de référence dans le cylindre (Tcyl(θ0)) au moment de référence (θ0) ;
(d) calculer la température de pulvérisation de référence (Tsp (θ0)) en soustrayant de la température de référence dans le cylindre (Tcyl(θ0)) une diminution de température due à une quantité d'injection de carburant déterminée dans l'injection principale en utilisant une expression arithmétique ;
(e) calculer une quantité de préchauffage requise (Qprq), qui est une quantité de préchauffage dans le cylindre requise à partir de l'injection auxiliaire, comme valeur corrigée vers le haut dans la mesure d'une quantité d'énergie correspondant à un manque à gagner de la température de pulvérisation de référence

(Tsp ($\theta$0)) par rapport à la température de pulvérisation cible (Tsptrg) ; et

(f) calculer la quantité d'injection de carburant auxiliaire (Qpl) sur la base de la quantité de préchauffage requise (Qprq), et la quantité d'injection de carburant auxiliaire (Qpl) calculée qui est réglée par le moyen de réglage de quantité d'injection auxiliaire est reflétée dans l'injection auxiliaire dans le moteur à combustion interne (1).

**2.** Appareil de commande (100) selon la revendication 1, dans lequel

la fin de la période de retard d'allumage physique est obtenue comme un moment après qu'un rapport d'équivalence de carburant dans le jet injecté dans l'injection principale a dépassé un rapport d'équivalence combustible dans le jet ($\varphi$trg) spécifique et auquel le rapport d'équivalence dans le jet diminue jusqu'au rapport d'équivalence de combustible dans le jet ($\varphi$trg).

**3.** Appareil de commande (100) selon la revendication 1, dans lequel

la fin de la période de retard d'allumage physique est obtenue sur la base de d'une vitesse de moteur, d'une charge de moteur, et d'un état de gaz dans le cylindre.

**4.** Appareil de commande (100) selon l'une quelconque des revendications 1 à 3, dans lequel

la température de pulvérisation de référence (Tsp ($\theta$0)) est calculée sur la base de la température de référence dans le cylindre (Tcyl($\theta$0)), d'une température de carburant (TspO) à un moment de début d'injection dans l'injection principale, et d'une quantité d'injection de carburant (Qinj) de celle-ci.

**5.** Appareil de commande (100) selon la revendication 4, dans lequel

la température du carburant au moment de début d'injection dans l'injection principale est calculée sur la base d'une température du carburant (thf) avant l'injection, d'une pression d'injection (pcr) de carburant, et d'une température de liquide de refroidissement (thw) du moteur à combustion interne (1).

**6.** Appareil de commande (100) selon l'une quelconque des revendications 1 à 5, dans lequel

le moyen de réglage de quantité d'injection auxiliaire est configuré de manière à calculer la quantité d'injection de carburant auxiliaire (Qpl) sur la base de la quantité de préchauffage requise (Qprq) et d'une concentration d'oxygène ($O_2$con) dans le cylindre.

**7.** Appareil de commande (100) selon l'une quelconque des revendications 1 à 6, dans lequel

le moyen de réglage de quantité d'injection auxiliaire est configuré de manière à corriger la quantité d'injection de carburant auxiliaire (Qpl) en fonction d'au moins l'une parmi une variation d'une quantité d'injection de carburant dans l'injection auxiliaire pour chaque cylindre, une variation de la quantité de préchauffage requise pour chaque cylindre, et une variation d'une température dans le cylindre au moment de référence pour chaque cylindre.

FIG.1

FIG.2

FIG.3

| | | 100 |
|---|---|---|
| 40 | Crank position sensor | |
| 41 | Rail pressure sensor | Supply pump — 21 |
| 42 | Throttle opening degree sensor | |
| 43 | Airflow meter | Injector — 23 |
| 44 | A/F sensor | |
| 45 | Exhaust temperature sensor | Variable nozzle vane mechanism — 54 |
| 46 | Water temperature sensor | |
| 47 | Accelerator opening degree sensor | Throttle valve — 62 |
| 48 | Intake pressure sensor | |
| 49 | Intake temperature sensor | EGR valve — 81 |

ECU

# FIG.4

FIG.5

```
        ┌─────────────────────────┐
        │   Pilot injection control │
        └─────────────────────────┘
                    │
                    ▼
     ┌───────────────────────────────┐
     │  Read amounts of state of engine: │  ── ST1
     │      NE, Qfin, Pim, Egr        │
     └───────────────────────────────┘
                    │
                    ▼
     ┌───────────────────────────────┐
     │  Calculate main injection execution │  ── ST2
     │  timing and target spray temperature │
     └───────────────────────────────┘
                    │
                    ▼
       ┌─────────────────────────┐
       │  Calculate reference time │  ── ST3
       └─────────────────────────┘
                    │
                    ▼
     ┌───────────────────────────────┐
     │  Calculate reference in-cylinder │  ── ST4
     │          temperature           │
     └───────────────────────────────┘
                    │
                    ▼
     ┌───────────────────────────────┐
     │   Calculate spray temperature   │  ── ST5
     └───────────────────────────────┘
                    │
                    ▼
     ┌───────────────────────────────┐
     │   Calculate required preheating  │  ── ST6
     │            amount              │
     └───────────────────────────────┘
                    │
                    ▼
     ┌───────────────────────────────┐
     │  Calculate pilot injection amount │  ── ST7
     │     and pilot injection time    │
     └───────────────────────────────┘
                    │
                    ▼
          ┌─────────────────┐
          │     RETURN      │
          └─────────────────┘
```

FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009072235 A1

- EP 2626540 A1